(19) Europäisches Patentamt
European Patent Office
Office européen des brevets

(11) Veröffentlichungsnummer: **0 323 406 A2**

(12) **EUROPÄISCHE PATENTANMELDUNG**

(21) Anmeldenummer: **88810878.4**

(22) Anmeldetag: **20.12.88**

(51) Int. Cl.[4]: **C 08 G 59/42**
C 08 G 59/68

(30) Priorität: **29.12.87 CH 5090/87**

(43) Veröffentlichungstag der Anmeldung:
**05.07.89 Patentblatt 89/27**

(84) Benannte Vertragsstaaten:
**AT CH DE FR GB IT LI NL SE**

(71) Anmelder: **CIBA-GEIGY AG**
**Klybeckstrasse 141**
**CH-4002 Basel (CH)**

(72) Erfinder: **Munk, Kurt, Dr.**
**Muttenzerstrasse 28**
**D-7889 Grenzach (DE)**

# (54) Härtbare Gemische.

(57) Härtbare Gemische enthaltend

a) mindestens ein Epoxidharz mit durchschnittlich mehr als einer 1,2-Epoxidgruppe pro Molekül

b) mindestens ein cyclisches Carbonsäureanhydrid

c) ein Umsetzungsprodukt eines $C_6$-$C_{18}$-Carbonsäure-Zinksalzes mit einem tertiären Amin und

d) gegebenenfalls einen Füllstoff und/oder weitere technisch übliche Zusatzstoffe weisen eine lange Gebrauchsdauer auf, ohne dass die kurze Härtungszeit bei erhöhten Temperaturen beeinträchtigt wird

EP 0 323 406 A2

**Beschreibung**

## Härtbare Gemische

Die vorliegende Erfindung betrifft härtbare Gemische enthaltend Polyepoxide, Carbonsäureanhydride, ein Umsetzungsprodukt aus einem Carbonsäure-Zinksalz mit einem tertiären Amin als Latenzverbesserer, sowie gegebenenfalls Füllstoffe und/oder übliche Additive ferner die Umsetzungsprodukte selbst und die Verwendung solcher Umsetzungsprodukte als latente Beschleuniger für diese härtbaren Gemische.

Aus der DE-OS 2,321,004 sind als Katalysatoren für wärmehärtbare Epoxidharz-/Anhydrid-Systeme Gemische aus einer Zinkverbindung und einem Amin, das mindestens einen Stearylrest am Stickstoff gebunden enthält, bekannt. Weiter sind in der JP-OS 60-123,526 Gemische aus Epoxidharz, Säureanhydrid, Katalysator, wie z.B. Carbonsäure-Metallsalz oder tertiäres Amin, und Füllstoff genannt.

Ferner ist aus der JP-OS 60-190,417 bekannt, dass bei Polyepoxid-/Polyisocyanat-Systemen als Ringschluss-Katalysator ein Gemisch aus einem tertiären Amin und Uebergangsmetallsalz einer Carbonsäure eingesetzt werden kann. Ebenfalls kann ein Addukt aus tertiärem Amin und Carbonsäuresalz verwendet werden.

Weiter sind in der JP-OS 50-140,600 Epoxidharzzusammensetzungen für Prepregs beschrieben, die als Härter ein Amin und ein Metallsalz einer Carbonsäure enthalten.

In Kobunshi Kagaku 30 (1973), 121-125 wird die Härtung von einem Epoxidharz mit Methyltetrahydrophthalsäureanhydrid in Gegenwart von Benzyldimethylamin und Zinkcaprylat beschrieben.

Die vorliegende Erfindung betrifft härtbare Gemische enthaltend

a) mindestens ein Epoxidharz mit durchschnittlich mehr als einer 1,2-Epoxidgruppe pro Molekül
b) mindestens ein cyclisches Carbonsäureanhydrid
c) ein Umsetzungsprodukt eines $C_6$-$C_{18}$-Carbonsäure-Zinksalzes mit einem tertiären Amin und
d) gegebenenfalls einen Füllstoff und/oder weitere technisch übliche Zusatzstoffe.

Vorzugsweise enthalten die erfindungsgemässen härtbaren Gemische als Epoxidharze a) Polyepoxidverbindungen, insbesondere solche aus aliphatischen, cycloaliphatischen oder aromatischen Polyepoxiden oder Mischungen davon, die durchschnittlich mindestens zwei 1, 2-Epoxidgruppen pro Molekül enthalten.

Als Epoxidharze a) eignen sich alle Typen von Epoxidharzen, wie beispielsweise solche, die direkt an Sauerstoff-, Stickstoff- oder Schwefelatome gebundene Gruppen der Formel

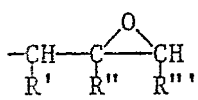 ,

worin entweder R′ und R‴ je ein Wasserstoffatom darstellen, in welchem Fall R″ dann ein Wasserstoffatom oder eine Methylgruppe bedeutet, oder R′ und R‴ zusammen $-CH_2CH_2-$ oder $-CH_2CH_2CH_2-$ darstellen, in welchem Fall R″ dann ein Wasserstoffatom bedeutet, enthalten.

Als Beispiele solcher Harze seien Polyglycidyl- und Poly(ß-methylglycidyl)-ester genannt, die man durch Umsetzung einer zwei oder mehr Carbonsäuregruppen pro Molekül enthaltenden Verbindung mit Epichlorhydrin, Glycerindichlorhydrin oder ß-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren wie Tetrahydrophthalsäure, 4-Methyltetrahydro phthalsäure, Hexahydrophthalsäure und 4-Methylhexahydrophthalsäure und von aromatischen Polycarbonsäuren wie Phthalsäure, Isophthalsäure und Terephthalsäure ableiten.

Weitere Beispiele sind Polyglycidyl- und Poly-(ß-methylglycidyl)-äther, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Aether lassen sich mit Poly-(epichlorhydrin) aus acyclischen Alkoholen wie Aethylenglykol, Diäthylenglykol und höheren Poly-(oxyäthylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit und Sorbit, aus cycloaliphatischen Alkoholen wie Resorcit, Chinit, Bis-(4-hydroxycyclohexyl)-methan, 2,2-Bis-(4-hydroxycyclohexyl)-propan und 1,1-Bis-(hydroxymethyl)-cyclohexen-3- und aus Alkoholen mit aromatischen Kernen wie N,N-Bis-(2-hydroxyäthyl)-anilin und p,p′-Bis-(2-hydroxyäthylamino)-diphenylmethan herstellen. Man kann sie ferner aus einkernigen Phenolen wie Resorcin und Hydrochinon sowie mehrkernigen Phenolen wie Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan (sonst als Bisphenol A bekannt) und 2,2-Bis-(3,5-dibrom-4-hydroxyphenyl)-propan sowie aus Aldehyden wie Formaldehyd, Acetaldehyd, Chloral und Furfurol, mit Phenolen wie Phenol selbst und durch Chloratome oder Alkylgruppen mit jeweils bis zu neun Kohlenstoffatomen ringsubstituiertem Phenol wie 4-Chlorphenol, 2-Methylphenol und

4-tert.-Butylphenol gebildeten Novolaken herstellen.

Poly-(N-glycidyl)-verbindungen umfassen beispielsweise solche, die durch Dehydrochlorierung der Umsetzungsprodukte von Epichlorhydrin mit mindestens zwei Aminowasserstoffatome enthaltenden Aminen wie Anilin, n-Butylamin, Bis-(4-aminophenyl)-methan und Bis-(4-methyl-aminophenyl)-methan erhalten werden. Triglycidylisocyanurat sowie N,N′-Diglycidylderivate von cyclischen Alkylenharnstoffen wie Aethylenharnstoff und 1,3-Propylenharnstoff, und Hydantoinen, wie 5,5-Dimethylhydantoin.

Poly-(S-glycidyl)-verbindungen sind zum Beispiel die Di-S-glycidylderivate von Dithiolen wie Aethan-1,2-dithiol und Bis-(4-mercaptomethylphenyl)-äther.

Beispiele für Epoxidharze mit Gruppen der Formel

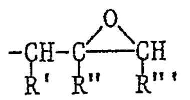 ,

worin R′ und R‴ zusammen eine $-CH_2CH_2-$Gruppe bedeuten, sind Bis-(2,3-epoxycyclopentyl)-äther, 2,3-Epoxycyclopentyl-glycidyläther, 1,2-Bis-(2,3-epoxycyclopentyloxy)-äthan und 3,4-Epoxycyclohexylmethyl-3′,4′-epoxycyclohexancarboxylat.

In Betracht kommen auch Epoxidharze, in welchen die 1,2-Epoxidgruppen an Heteroatome verschiedener Art gebunden sind, z.B. das N,N,O-Triglycidylderivat des 4-Aminophenols, der Glycidyläther/Glycidylester der Salicylsäure oder p-Hydroxybenzoesäure, N-Glycidyl-N′-(2-glycidyloxypropyl)-5,5-dimethylhydantoin und 2-Glycidyloxy-1,3-bis-(5,5-dimethyl-1-glycidylhydantoinyl-3)propan.

Als cyclisches Carbonsäureanhydrid b> handelt es sich in den erfindungsgemässen härtbaren Gemischen vorzugsweise um ein alicyclisches Einfach-oder Mehrring-Anhydrid, ein aromatisches Anhydrid oder ein chloriertes oder bromiertes Anhydrid.

Beispiele für alicyclische Einfach-Anhydride sind:

Bernsteinsäureanhydrid, Citraconsäureanhydrid, Itaconsäureanhydrid, Alkenyl-substituierte Bernsteinsäureanhydride, Dodecenylbernsteinsäureanhydrid, Maleinsäureanhydrid und Tricarballylsäureanhydrid.

Beispiele für alicyclische Mehrring-Anhydride sind:

Maleinsäureanhydridaddukt an Methylcyclopentadien, Linolsäureaddukt an Maleinsäureanhydrid, alkylierte Endoalkylentetrahydrophthalsäureanhydride, Hexahydrophthalsäureanhydrid, Methyltetrahydrophthalsäureanhy drid, Tetrahydrophthalsäureanhydrid; wobei von den beiden letzteren die Isomerengemische besonders geeignet sind. Ebenfalls bevorzugt ist Hexahydrophthalsäureanhydrid.

Beispiele für aromatische Anhydride sind:

Pyromellitsäuredianhydrid, Trimellitsäureanhydrid und Phthalsäureanhydrid.

Beispiele für chlorierte oder bromierte Anhydride sind:

Tetrachlorphthalsäureanhydrid, Tetrabromphthalsäureanhydrid, Dichlormaleinsäureanhydrid und Chlorendic-Anhydrid.

Vorzugsweise werden flüssige oder leicht schmelzende Dicarbonsäureanhydride in den erfindungsgemässen härtbaren Gemischen eingesetzt.

Bevorzugt sind härtbare Gemische enthaltend als cyclisches Carbonsäureanhydrid ein alicyclisches Einfach- oder Mehrring-Anhydrid, insbesondere Hexahydrophthalsäureanhydrid, Methyltetrahydrophthalsäureanhydrid und dessen Isomerengemisch.

Ebenfalls von Interesse sind härtbare Gemische, die als cyclisches Carbonsäureanhydrid ein aromatisches Anhydrid enthalten.

Weiter interessant sind härtbare Gemische enthaltend als cyclisches Carbonsäureanhydrid ein chloriertes oder bromiertes Anhydrid.

In den Umsetzungsprodukten c) der erfindungsgemässen härtbaren Gemische kann das tertiäre Amin vorzugsweise ein Amin der Formeln I, II oder III sein,

$$N(R^1)(R^2)(R^3) \qquad (I)$$

$$(R^4)(R^5)N-A-N(R^6)(R^7) \qquad (II)$$

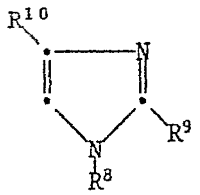

(III)

worin $R^1$, $R^2$, $R^4$ und $R^6$ unabhängig voneinander $C_1$-$C_{12}$-Alkyl, $R^3$, $R^5$ und $R^7$ $C_1$-$C_{12}$-Alkyl, unsubstituiertes oder substituiertes Phenyl, Benzyl, Phenylethyl, Cyclopentyl oder Cyclohexyl; oder $R^2$ und $R^3$ zusammen $-(CH_2)_p-$ mit p gleich 4 oder 5, $-(CH_2)_2-O-(CH_2)_2-$ oder $-(CH_2)_2-NH-(CH_2)_2-$, A $C_1$-$C_4$-Alkylen; $R^8$ H, $C_1$-$C_8$-Alkyl oder Benzyl, $R^9$ H, $C_1$-$C_{18}$-Alkyl, Benzyl oder Phenyl, sowie $R^{10}$ H oder $C_1$-$C_4$-Alkyl bedeuten. Weiter kann das tertiäre Amin ein heterocyclisches Amin wie z.B. ein Pyrazol, ein Triazol, ein Pyridin, ein Pyridazin, ein Dihydropyridazin, ein Pyrimidin, ein Dihydropyrimidin, ein Pyrazin oder ein Dihydropyrazin darstellen.

Bevorzugt sind härtbare Gemische enthaltend als tertiäres Amin ein heterocyclisches Amin, speziell bevorzugt ein Imidazol, insbesondere 1-Methylimidazol.

Bei der $C_6$-$C_{18}$-Carbonsäure-Zinksalz-Komponente der Umsetzungsprodukte c) der erfindungsgemässen härtbaren Gemische handelt es sich vorzugsweise um die Zinksalze von linearen Alkansäuren wie z.B. Capronsäure, Oenanthsäure, Caprylsäure, Pelargonsäure, Caprinsäure, Undecansäure, Laurinsäure, Tridecansäure, Myristinsäure, Pentadecansäure, Palmitinsäure, Heptadecansäure oder Stearinsäure, ferner um die Zinksalze der Naphthensäuren.

In einer weiteren Ausführungsform der erfindungsgemässen härtbaren Gemische sind die Zinksalze von verzweigten Alkansäuren wie z.B. 2-Ethyl-capronsäure, 2-Butyl-caprylsäure oder 2-Hexyl-caprinsäure als $C_6$-$C_{18}$-Carbonsäure-Zinksalz-Komponente der Umsetzungsprodukte c) ebenfalls bevorzugt.

In den erfindungsgemässen Gemischen werden bevorzugt die Zinksalze der Carbonsäuren mit 8 bis 12, insbesondere mit 8 C-Atomen, und ganz speziell das Zinksalz der Caprylsäure eingesetzt.

Ebenfalls ganz speziell bevorzugt wird das Zinksalz der 2-Ethyl-capronsäure in den erfindungsgemässen Gemischen eingesetzt.

Ganz besonders bevorzugte Komponente c) in den erfindungsgemässen härtbaren Gemischen ist das Umsetzungsprodukt aus Zinkcaprylat und 1-Methylimidazol.

Ebenfalls speziell bevorzugt als Komponente c) in den erfindungsgemässen härtbaren Gemischen ist das Umsetzungsprodukt aus Zink-2-ethyl-capronat und 1-Methylimidazol.

Die erfindungsgemässen Umsetzungsprodukte c) selbst sind neu und daher auch Gegenstand der vorliegenden Erfindung.

Die erfindungsgemässen Umsetzungsprodukte werden nach an und für sich bekannten Methoden hergestellt, wie z.B. durch Zugabe der Aminkomponente bei Raumtemperatur unter Rühren zum Zinksalz der Carbonsäure, wobei die Zugabe gegebenenfalls unter Stickstoffatmosphäre erfolgt.

Die Zugabe des Amins zum Carbonsäure-Zinksalz erfolgt zweckmässigerweise im stöchiometrischen Verhältnis oder in leichtem Ueberschuss, bevorzugt jedoch im Verhältnis von 1,05 bis 2,5, insbesondere von 1,2 bis 2,0 Molen Amin pro Mol Carbonsäure-Zinksalz.

Die härtbaren Gemische können auch Komponenten enthalten, die im allgemeinen an den chemischen Reaktionen, die zu den gehärteten Formstoffen führen, nicht beteiligt sind. Als derartige Füllstoffe eignen sich mineralische und faserförmige Füllstoffe, wie Quarzmehl, Quarzgut, Aluminiumoxid, Glaspulver, Glimmer, Kaolin, Dolomit, Graphit, Russ, sowie Kohlefasern und Textilfasern. Bevorzugte Füllstoffe sind Quarzmehl, Quarzgut, Aluminiumoxid oder Dolomit. Farbstoffe, Pigmente, Stabilisatoren und Haftvermittler sowie andere Additive üblicher Art können den härtbaren Gemischen ebenfalls zugesetzt werden.

Die erfindungsgemässen Umsetzungsprodukte c) sind als latente Beschleuniger für Epoxidharz-/Carbonsäureanhydrid-Systeme gut geeignet. Sie bewirken eine Verlängerung der Gebrauchsdauer (Latenz), ohne die kurzen Härtungszeiten bei erhöhten Temperaturen zu beeinträchtigen, sowie eine Viskositätserniedrigung des reaktiven Gemisches.

Die erfindungsgemässen Umsetzungsprudukte c) werden den Epoxidharz-/Carbonsäureanhydrid-Systemen zweckmässig in Mengen von 0,05-4,0 Gew.-%, vorzugsweise 0,1-2,0 Gew.-%, insbesondere 0,1-1,0 Gew.-%, bezogen auf das Epoxidharz, zugesetzt.

Die erfindungsgemässen härtbaren Gemische werden als ungefüllte oder gefüllte Harzsysteme, besonders als Giess- und Imprägnierharze verwendet.

In den nachfolgenden Beispielen sind alle Mengenangaben, sofern nichts anderes angegeben ist, Gewichtsteile oder Gewichtsprozente.

Beispiel 1:

In einem Dreihalskolben werden zu 100 Gewichtsteilen Zinkoctoat (ca. 0,285 Mol) unter leichter Stickstoff-Durchleitung und unter Rühren 50 Gewichtsteile 1-Methyl-Imidazol (ca. 0,5 Mol) innerhalb 30 Minuten zugetropft. Am Ende der Zugabe erwärmt sich das Reaktionsgemisch auf 65°C durch die

entstandene Exothermieentwicklung. Es wird noch 20 Minuten gerührt, dabei steigt die Temperatur nicht mehr an.

Die Entstehung des Reaktionsproduktes kann mittels IR-Spektroskopie durch die Bildung der ausgeprägten Absorptionsbande bei 950 $cm^{-1}$ verfolgt werden, welche in den Ausgangsprodukten nicht vorhanden ist. Wir erhalten eine mittelviskose, hellgelbe Flüssigkeit als Reaktionsprodukt (Beschleuniger 1): Viskosität bei 25°C (nach Höppler) = 1400 mPa•s

Beispiel 2:

237 Gewichtsteile eines handelsüblichen Epoxidharzes auf Basis Hexahydrophthalsäurediglycidylester (ARALDIT CY 184) mit einem Epoxidäquivalent von 160 und einer Viskosität von 800 mPa•s, gemessen bei 25°C, werden mit 200 Gewichtsteilen in der Wärme verflüssigtem Härter Hexahydrophthalsäureanhydrid mit einem Härteräquivalent von 154 vermischt. In diese Mischung werden 494 g Quarzmehl B 300 der Sihelco AG, Birsfelden (CH) unter Erwärmen eingerührt und die Gemischtemperatur auf 40°C eingeregelt. Der Füllstoffgehalt beträgt somit 66,6 %.

Die Beschleunigermenge wird so gewählt, dass die Gelierzeit des Reaktionsgemisches bei 140°C 5 bis 6 Minuten beträgt. Die dafür notwendige Menge für 120 Gewichtsteile Reaktionsharzmasse ist von Beschleuniger 1 = 0,15 Gewichtsteile.

Um die Latenz bzw. die Topfzeiten des erfindungsgemässen Beschleunigers aufzuzeigen, wird der Viskositätsaufbau bei 40 und 25°C verfolgt (vgl. Tabelle 1 und 2).

Tabelle 1

Viskositätsaufbau in Funktion der Zeitdauer bei 40°C gemessen in mPa•s mit Contraves Rheomat

| | nach 0 Std. | nach 2 Std. | nach 4 Std. | nach 8 Std. | nach 15 Std. | Gelierzeit bei 140°C (Gelnormgerät) |
|---|---|---|---|---|---|---|
| Bsp 2 | 11'400 | 9'400 | 10'000 | 12'400 | 17'700 | 5 Min. 10 Sek. |

Tabelle 2

Viskositätsaufbau in Funktion der Zeitdauer bei 25°C in mPa•s mit Contraves Rheomat bei 40°C gemessen

| Beschleuniger 1 | nach 0 Tagen | nach 1 Tag | nach 3 Tagen | nach 7 Tagen | Gelierzeit bei 140°C |
|---|---|---|---|---|---|
| Beispiel 2 (jedoch bei 25°C gelagert) | 11'400 | 17'900 | 22'800 | 42'000 | 5 Min. 10 Sek. |

**Patentansprüche**

1. Härtbare Gemische enthaltend
   a) mindestens ein Epoxidharz mit durchschnittlich mehr als einer 1,2-Epoxidgruppe pro Molekül
   b) mindestens ein cyclisches Carbonsäureanhydrid
   c) ein Umsetzungsprodukt eines $C_6$-$C_{18}$-Carbonsäure-Zinksalzes mit einem tertiären Amin und
   d) gegebenenfalls einen Füllstoff und/oder weitere technisch übliche Zusatzstoffe.

2. Härtbare Gemische gemäss Anspruch 1, worin das Epoxidharz a) eine Polyepoxidverbindung darstellt, die durchschnittlich mindestens zwei 1,2-Epoxidgruppen pro Molekül enthält.

3. Härtbare Gemische gemäss Anspruch 2, worin die Polyepoxidverbindung aliphatische, cycloaliphatische oder aromatische Polyepoxide oder Mischungen davon bedeutet.

4. Härtbare Gemische gemäss Anspruch 1, worin das cyclische Carbonsäureanhydrid, ein alicyclisches Einfach- oder Mehrring-Anhydrid, ein aromatisches Anhydrid oder ein chloriertes oder bromiertes Anhydrid ist.

5. Härtbare Gemische gemäss Anspruch 4, worin das cyclische Carbonsäureanhydrid ein alicyclisches

Einfach- oder Mehrring-Anhydrid ist.

6. Härtbare Gemische gemäss Anspruch 4, worin das cyclische Carbonsäureanhydrid ein aromatisches Anhydrid ist.

7. Härtbare Gemische gemäss Anspruch 4, worin das cyclische Carbonsäureanhydrid ein chloriertes oder bromiertes Anhydrid ist.

8. Härtbare Gemische gemäss Anspruch 1, worin im Umsetzungsprodukt c) das tertiäre Amin ein heterocyclisches Amin ist.

9. Härtbare Gemische gemäss Anspruch 8, worin das heterocyclische Amin ein Imidazol ist.

10. Härtbare Gemische gemäss Anspruch 9, worin das Imidazol 1-Methylimidazol darstellt.

11. Härtbare Gemische gemäss Anspruch 1, worin im Umsetzungsprodukt c) die Carbonsäure des Carbonsäure-Zinksalzes 8-12 C-Atome besitzt.

12. Härtbare Gemische gemäss Anspruch 11, worin die Carbonsäure des Carbonsäure-Zinksalzes 8 C-Atome besitzt.

13. Härtbare Gemische gemäss Anspruch 12, worin es sich bei der Carbonsäure des Carbonsäure-Zinksalzes um die Caprylsäure handelt.

14. Härtbare Gemische gemäss Anspruch 12, worin es sich bei der Carbonsäure des Carbonsäure-Zinksalzes um die 2-Ethyl-capronsäure handelt.

15. Härtbare Gemische gemäss Anspruch 1, worin als Komponente c) ein Umsetzungsprodukt aus Zinkcaprylat und 1-Methylimidazol eingesetzt wird.

16. Härtbare Gemische gemäss Anspruch 1, worin als Komponente c) ein Umsetzungsprodukt aus Zink-2-ethyl-capronat und 2-Methylimidazol eingesetzt wird.

17. Härtbare Gemische gemäss Anspruch 1, worin als Komponente d) ein mineralischer und/oder faserförmiger Füllstoff eingesetzt wird.

18. Härtbare Gemische gemäss Anspruch 17, worin als Füllstoff Quarzmehl, Quarzgut, Aluminiumoxid oder Dolomit verwendet wird.

19. Härtbare Gemische gemäss Anspruch 1, worin als technisch übliche Zusatzstoffe Farbstoffe, Pigmente, Stabilisatoren und/oder Haftvermittler eingesetzt werden.

20. Umsetzungsprodukt eines $C_6$-$C_{18}$-Carbonsäure-Zinksalzes mit einem tertiären Amin.

21. Umsetzungsprodukt gemäss Anspruch 20, worin das tertiäre Amin ein Amin der Formeln I, II oder III ist,

$N(R^1)(R^2)(R^3)$ (I)

$(R^4)(R^5)N{-}A{-}N(R^6)(R^7)$ (II)

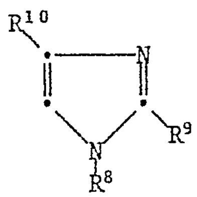

(III)

worin $R^1$, $R^2$, $R^4$ und $R^6$ unabhängig voneinander $C_1$-$C_{12}$-Alkyl, $R^3$, $R^5$ und $R^7$ $C_1$-$C_{12}$-Alkyl, unsubstituiertes oder substituiertes Phenyl, Benzyl, Phenylethyl, Cyclopentyl oder Cyclohexyl; oder $R^2$ und $R^3$ zusammen $-(CH_2)_p-$ mit p gleich 4 oder 5, $-(CH_2)_2-O-(CH_2)_2-$ oder $-(CH_2)_2-NH-(CH_2)_2-$, A $C_1$-$C_4$-Alkylen; $R^8$ H, $C_1$-$C_8$-Alkyl oder Benzyl, $R^9$ H, $C_1$-$C_{18}$-Alkyl, Benzyl oder Phenyl, sowie $R^{10}$ H oder $C_1$-$C_4$-Alkyl bedeuten, oder das tertiäre Amin ein Pyrazol, ein Triazol, ein Pyridin, ein Pyridazin, ein Dihydropyridazin, ein Pyrimidin, ein Dihydropyrimidin, ein Pyrazin oder ein Dihydropyrazin darstellt.

22. Umsetzungsprodukt gemäss Anspruch 20, worin das tertiäre Amin ein heterocyclisches Amin darstellt.

23. Umsetzungsprodukt gemäss Anspruch 21, worin das tertiäre Amin ein Imidazol ist.

24. Umsetzungsprodukt gemäss Anspruch 23, worin das tertiäre Amin 1-Methylimidazol ist.

25. Umsetzungsprodukt gemäss Anspruch 20, worin die Carbonsäure des Carbonsäure-Zinksalzes 8-12 C-Atome besitzt.

26. Umsetzungsprodukt gemäss Anspruch 25, worin die Carbonsäure des Carbonsäure-Zinksalzes 8 C-Atome besitzt.

27. Umsetzungsprodukt gemäss Anspruch 20, aus Zinkcaprylat und 1-Methylimidazol.

28. Umsetzungsprodukt gemäss Anspruch 20, aus Zink-2-ethyl-capronat und 1-Methylimidazol

29. Verwendung von Umsetzungsprodukten aus einem Carbonsäure-Zinksalz und einem tertiären Amin nach Anspruch 20 zur Latenzverbesserung in Epoxidharz-/Carbonsäureanhydrid-Systemen.